# EUROPÄISCHE PATENTSCHRIFT

(11) **EP 1 660 931 B1**
(45) Veröffentlichungstag und Bekanntmachung des Hinweises auf die Patenterteilung: **15.08.2007**
(21) Anmeldenummer: 04728540.8
(22) Anmeldetag: 21.04.2004
(51) Int. Cl.: G02F 1/09

(54) **FARADAYROTATOR**
FARADAY ROTATOR
ROTATEUR DE FARADAY

(30) Priorität: 23.07.2003 DE 10333570
(43) Veröffentlichungstag der Anmeldung: 31.05.2006
(73) Patentinhaber: LINOS Photonics GmbH & Co. KG, 37081 Göttingen (DE)
(72) Erfinder: FEHN, Thomas, Linos Photonics gmbh & Co. KG, 82152 Planegg (DE); POGGEL, Sven, Linos Photonics gmbh & Co. KG, 82152 Planegg (DE); BALLE, Stefan, Linos Photonics gmbh & Co. KG, 82152 Planegg (DE)
(74) Vertreter: Säger, Manfred
(86) Internationale Anmeldenummer: PCT/EP2004/004232
(87) Internationale Veröffentlichungsnummer: WO 2005/019914

(56) Entgegenhaltungen:
- US-A- 3 781 592
- US-A- 5 115 340
- US-A- 5 428 335
- US-A- 5 528 415
- US-A- 5 715 080

## Beschreibung

Die Erfindung betrifft einen Faradayrotator für einen Faradayisolator gemäß dem Oberbegriff des Hauptanspruchs, mämlich einen solchen Faradayisolator mit einem Eintrittspolarisator, mit einem Austrittspolarisator, mit einem dazwischen angeordneten, walzenförmigen, zu dessen Symmetrieachse symmetrisch angeordneten optischen Kristall, mit einem diesen umgebenden, senkrechten hohlen Zylinder aus einem permanentmagnetischen Werkstoff, der axial magnetisiert ist und dessen Magnetfeld sich in dem hohlen Raum etwa parallel zu der in nur einer Richtung vom Nordpol zum Südpol verlaufenden Symmetrieachse erstreckt, und mit je einem sich an die beiden Stirnflächen in der von den zu der Symmetrieachse Senkrechten y- und z-Richtung aufgespannten Ebene anschließenden Abschlussmagnet, der als hohler, senkrechter Zylinder ausgebildet ist und in Verlängerung der Symmetrieachse eine Durchlassöffnung aufweist.

Faradayisolatoren, auch optischer Isolator genannt, besitzen die Aufgabe, einen Laserstrahl in nur einer Richtung passieren zu lassen. Hierzu weist er einen optischen Rotator auf, auch Faradayrotator genannt, an dessen Ein- und Ausgang jeweils ein Polarisator montiert ist, deren Polarisationsrichtung zueinander einen halben rechten Winkel bilden. Der Faradayrotator besteht im allgemeinen aus einem walzenförmigen Kristall aus einem magnetooptischen Material (zum Beispiel TGG). Der Kristall ist von einem hohlen senkrechten Zylinder aus einem permanentmagnetischen Werkstoff umgeben, welcher ein längs der Symmetrieachse des Kristalls verlaufendes Magnetfeld erzeugt. Der Faradayeffekt besteht darin, dass die Polarisationsrichtung des eintretenden Laserstrahls beim Durchgang durch den Kristall um einen bestimmten Winkel gedreht wird. Dabei ist der Drehsinn der Verdrehung der Polarisationsrichtung unabhängig von der Ausbreitungsrichtung des Laserstrahls. Der Betrag des Drehwinkels hängt von einer für das Material des optischen Kristalls charakteristischen Konstanten ab. Diese ihrerseits ist eine Funktion der Wellenlänge des Laserstrahls. Der Verdrehwinkel der Polarisationsrichtung wird hierbei im Betrieb so eingestellt, dass er etwa 45° einnimmt. Um diesen Winkel ist auch der Ausgangspolarisator verdreht angeordnet, der mithin die maximale Strahlenintensität transmittiert. Ein gegen die Ausbreitungsrichtung laufender Strahl passiert den Ausgangspolarisator und wird von dem Faradayrotator wiederum um 45° (in die gleiche Richtung), also insgesamt um einen rechten Winkel gedreht, so dass an dem Eingangspolarisator für den rücklaufenden Laserstrahl eine hohe Auslöschung, auch Extinktion genannt, bewirkt wird. Um diese weiter zu einer höheren Extinktion zu steigern, werden sogenannte zwei- oder auch sogar mehrstufige Faradayisolatoren verwendet, bei denen die Extinktion weiter verbessert wird.

Ein solcher gattungsgemäßer Faradayisolator gemäß dem Oberbegriff ist an sich z.B. aus US5115340 bekannt. Der walzenförmige magnetooptische Kristall ist von einem im Querschnitt kreisringförmigen, senkrechten hohlen Zylinder aus permanentmagnetischem Material umgeben, der magnetisch in axialer Richtung polarisiert ist. An die beiden Deckflächen dieses hohlen Zylinders können sich -beiderseits- je ein Abschlussmagnet in Form eines senkrechten, im Querschnitt kreisringförmigen Hohlzylinders anschließen , die beide parallel zur Symmetrieachse des magnetooptischen Kristalls, also auch in axialer Richtung magnetisiert sind, wie der den Kristall umgebende hohle Zylinder. Außerdem sind die beiden Abschlussmagnete axial in gleicher Richtung zueinander und bezüglich des hohlen Zylinders als Zentralmagnet entgegengesetzt magnetisiert.

Ein solcher allgemein bekannter Faradayisolator hat sich bewährt. Um die notwendigen magnetischen Feldstärken im magnetooptischen Kristall zu erreichen, ist allerdings eine kompaktere Bauweise nicht möglich.

Der Erfindung liegt deshalb die Aufgabe zugrunde, einen gattungsgemäßen Faradayisolator gemäß dem Oberbegriff des Hauptanspruchs bei guter Homogenität der magnetischen Feldstärke kompakter auszugestalten.

Diese Aufgabe wird bei einem gattungsgemäßen Faradayisolator gemäß dem Oberbegriff des Hauptanspruchs erfindungsgemäß durch dessen kennzeichnende Merkmale nämlich dadurch gelöst, dass jeder Abschlussmagnet zumindest bereichsweise im wesentlichen bezüglich der Symmetrieachse radial magnetisiert ist, dass der eine der beiden Abschlussmagnete radial von innen nach außen und der andere Abschlussmagnet radial von außen nach innen gerichtet magnetisiert ist und dass der hohle Zylinder mit seinem Nordpol an den von innen nach außen gerichtet magnetisierten Abschlussmagnet und mit seinem Südpol an den von außen nach innen gerichtet magnetisierten Abschlussmagnet angrenzt.

Bei dem erfindungsgemäßen Prinzip ist also der in axialer Richtung parallel zur Symmetrieachse magnetisierte -mittlere- Zylinder wichtig. Dessen magnetische Feldstärken werden in dem hohlen Raum des Zylinders (also im Bereich des Kristalls) durch die beiden Abschlussmagnete im Bereich der Berührungsstelle zu dem -mittleren- Zylinder so verstärkt, dass sich über die axiale Länge des Kristalls eine höhere magnetische Feldstärke ergibt.

Dieses erfindungsgemäße Prinzip weist den Vorteil auf, dass man bei gleicher Effizienz eine sowohl in axialer als auch radialer Richtung erheblich kleinere Bauform für den Faradayrotator vorsehen kann, so dass sich insgesamt für den Faradayisolator gemäß der Erfindung eine kompakte Bauform ergibt. Um diese weiter zu einer maximalen Extinktion zu steigern, bei der die noch vorhandene letzte Transmission unter vernachlässigbare Werte gedrückt wird, kann die Erfindungauch bei den zwei- oder mehrstufigen Faradayisolatoren Einsatz finden.

Die beiden Abschlussmagnete können entweder als einstückige senkrechte, im Querschnitt kreisförmige Hohlzylinder mit einem bezüglich der Symmetrieachse ideal radial ausgerichteten Magnetfeld ausgestattet sein; oder aus im Querschnitt im wesentlichen kreissektorförmigen einzelnen Teilen nach Art von Tortenstücken bestehen, in denen eine einheitliche Ausrichtung des Magnetfeldes in eine Richtung, und zwar parallel zu der -durch die Symmetrieachse des Kristalls hindurchgehende- Symmetrieebene des tortenstückförmigen Teils vorherrscht. Eine solche Ausbildung würde man dann erhalten, wenn man das tortenstückförmige Teil aus einem quaderförmigen Permanentmagnet mit einheitlichem Magnetfeld herausschneidet.

Es ist zwar bekannt, bei Faradayisolatoren näherungsweise radial magnetisierte Magnete einzusetzen (US-A 5,528,415). Abgesehen davon, dass diese aus vier strahlensymmetrischen, im Querschnitt trapezförmigen Teilen bestehende Magnete unter Freilassung eines im Querschnitt quadratischen Durchlasses, also im Gegensatz zur Erfindung den walzenförmigen Kristall nicht symmetrisch einfassen, fehlt ein mittiger Zylinder des Permanentmagneten bei dieser bekannten Ausführungsform, der aber für die Erfindung wegen des Überlagerungseffektes an der Berührungsstelle wichtig ist. Außerdem sind die beiden radial magnetisierbaren Magnete in Axialrichtung beabstandet voneinander angeordnet, so dass infolge dessen nur ein schwacher Überlagerungseffekt im Nachbarschaftsbereich der beiden Magnete zum Tragen kommen kann. In zweckmäßiger Ausführungsform sind die zumindest bereichsweise im wesentlichen radial magnetisierten Abschlussmagnete so magnetisiert, dass sie auch noch eine Komponente in Richtung der Symmetrieachse des Kristalls besitzen. Hierdurch bedingt ergibt sich eine weitere Steigerung der Stärke des Magnetfeldes im hohlen Bereich des Zylinders im Vergleich zu dem gattungsgemäßen Stand der Technik.

Weitere zweckmäßige Ausgestaltungen und Weiterbildungen der Erfindung sind in den Unteransprüchen gekennzeichnet.

Ein bevorzugtes Ausführungsbeispiel der Erfindung wird nachfolgend unter Bezugnahme auf die Zeichnung näher erläutert. In dieser zeigt:
- Figur 1: den Faradayrotator gemäß der Erfindung in perspektivischer Darstellung;
- Figur 2: den Faradayrotator gemäß Figur 1, in schematischer Stirnansicht;
- Figur 3: eine Ansicht III-III gemäß Figur 2;
- Figur 4: einen Schnitt IV-IV gemäß Figur 3;
- Figur 5: einen Schnitt V-V gemäß Figur 4;
- Figur 6: die Einzelheit VI gemäß Figur 2;
- Figur 7a: den Schnitt VII-VII gemäß Figur 6, als erste Ausführungsform und
- Figur 7b: den Schnitt VII-VII gemäß Figur 6 in zweiter Ausführungsform.

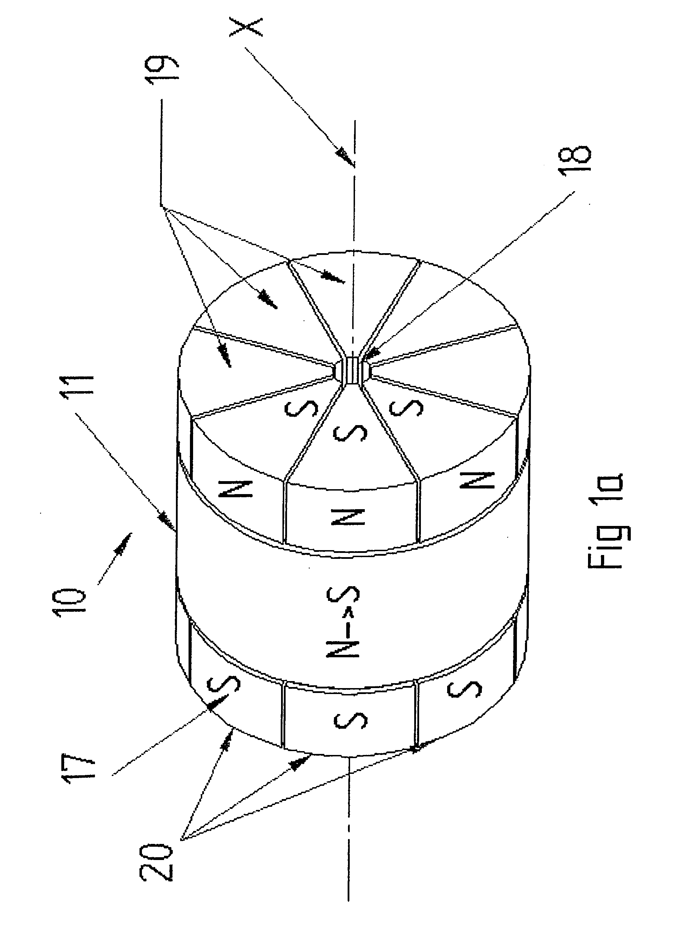

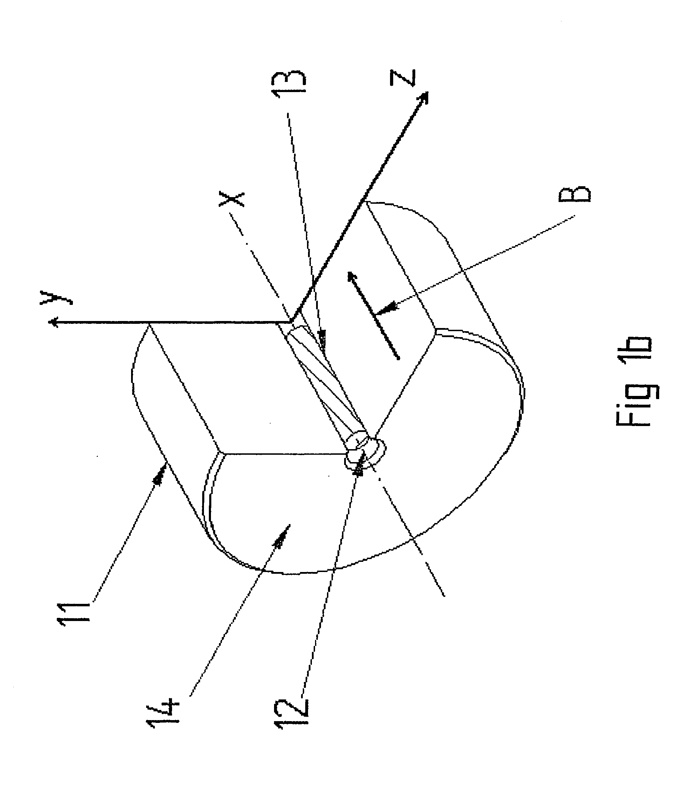

Der insgesamt mit 10 bezeichnete Faradayisolator in Figur 1 ist bezüglich seiner Symmetrieachse (x) symmetrisch aufgebaut. Er weist einen senkrechten, im Querschnitt kreisringförmigen -mittleren- Zylinder 11 auf (Fig. 1a), in dessen zylinderförmigen Hohlraum 12 der insgesamt mit 13 bezeichnete magnetooptische Kristall angeordnet ist (Fig. 1b). Der Kristall kann in axialer Richtung sich über die gesamte axiale Länge des Zylinders 11 bis zu den beiden Stirnflächen 14 erstrecken, die in den beiden, zur Symmetrieachse x senkrechten, durch die y- sowie z-Achse aufgespannten Ebene liegen. Der Zylinder 11 besteht aus einem permanentmagnetischen Werkstoff und ist mit seinem Magnetfeld B parallel zur Symmetrieachse x ausgerichtet. (Figur 1b).

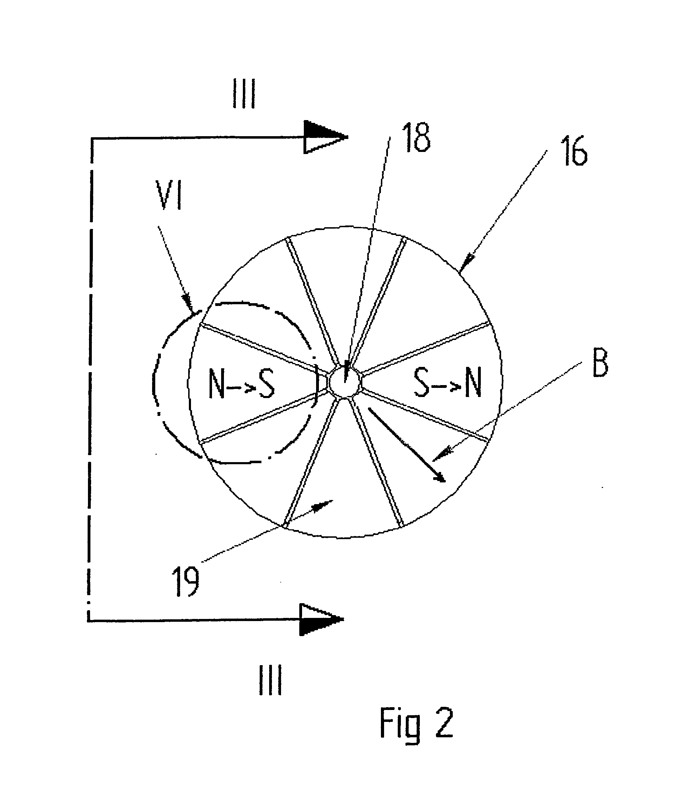

An die beiden Stirnflächen 14 schließen sich, wie aus Figur 1a ersichtlich, die beiden Abschlussmagnete 16 und 17 an, die beide ebenfalls wie der Zylinder 11 als hohle, senkrechte, im Querschnitt kreisringförmige Zylinder ausgebildet sind und in Verlängerung der Symmetrieachse x eine Durchlassöffnung 18 (siehe auch Figur 2) aufweisen.

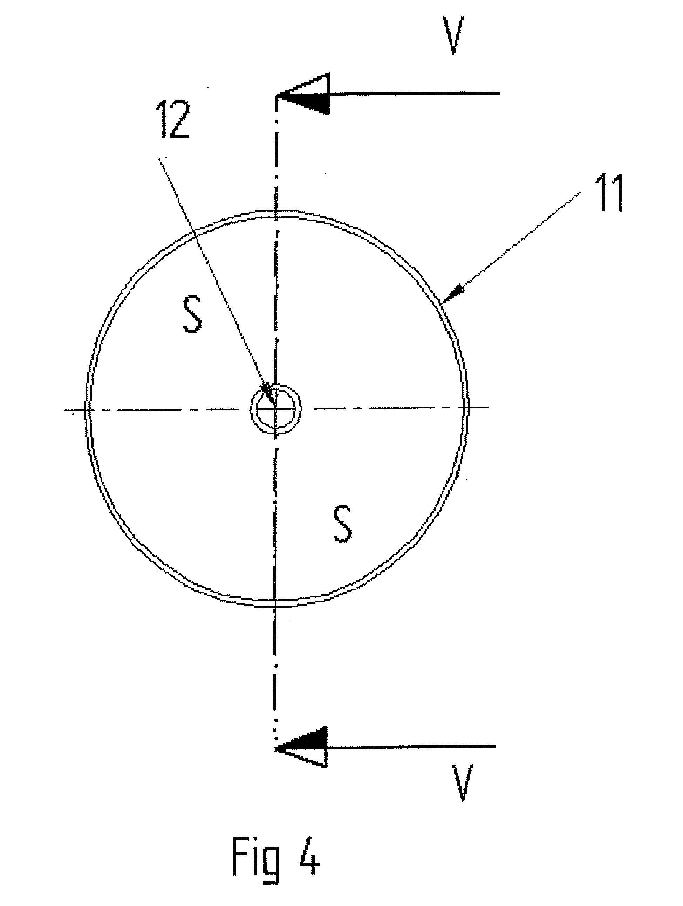

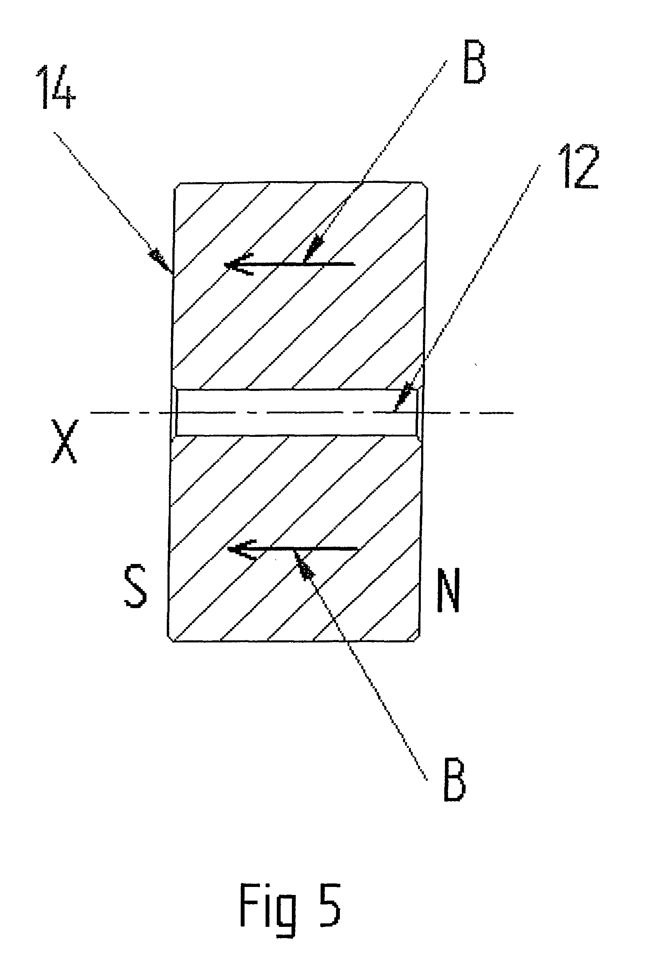

Der hohle Zylinder 11 als Permanentmagnet ist in den Figuren 4 und 5 näher dargestellt. Deutlich ersichtlich ist die parallel zur Symmetrieachse x ausgerichtete magnetische Feldstärke B, deren Nordpol N sich auf der einen Stirnseite 14 und deren Südpol S sich auf der gegenüberliegenden Stirnseite befindet.

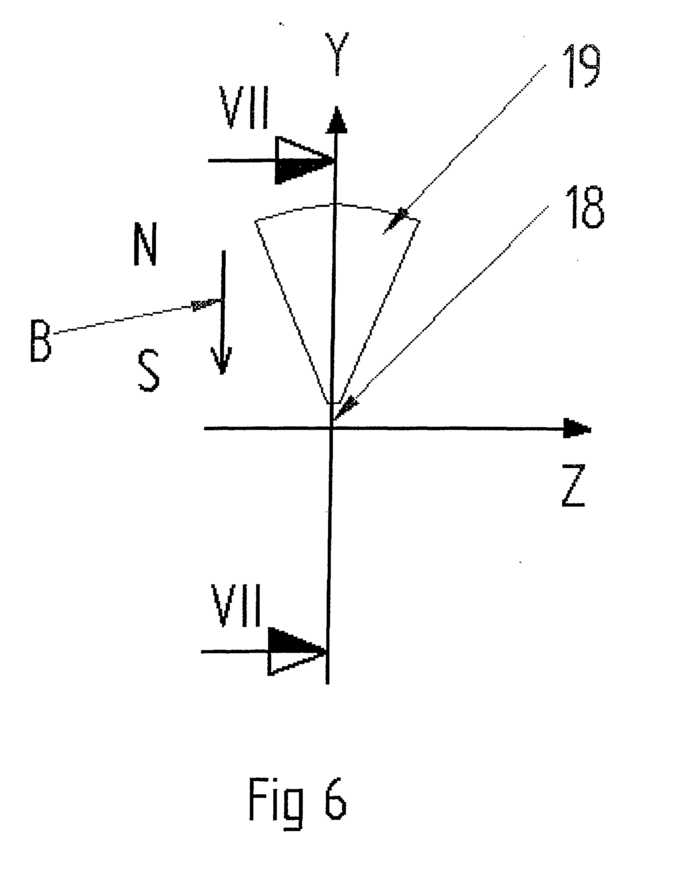

Jeder der beiden Abschlussmagnete 16, 17 ist beim wiedergegebenen Ausführungsbeispiel nicht einstückig und exakt radial magnetisiert ausgebildet, sondern besteht aus acht tortenstückähnlichen bezüglich der Symmetrieachse x im wesentlichen radial magnetisierten, strahlensymmetrischen Teilen 19 bzw. 20. Ein solches Teil 19 (Fig. 2) ist in Figur 6 näher und im größeren Maßstab dargestellt. Die Symmetrieachse x steht hierbei senkrecht zur Zeichenebene, die im Schnitt den bis auf die Durchlassöffnung 18 im wesentlichen kreissektorförmigen Teil in der y-z-Ebene zeigt.

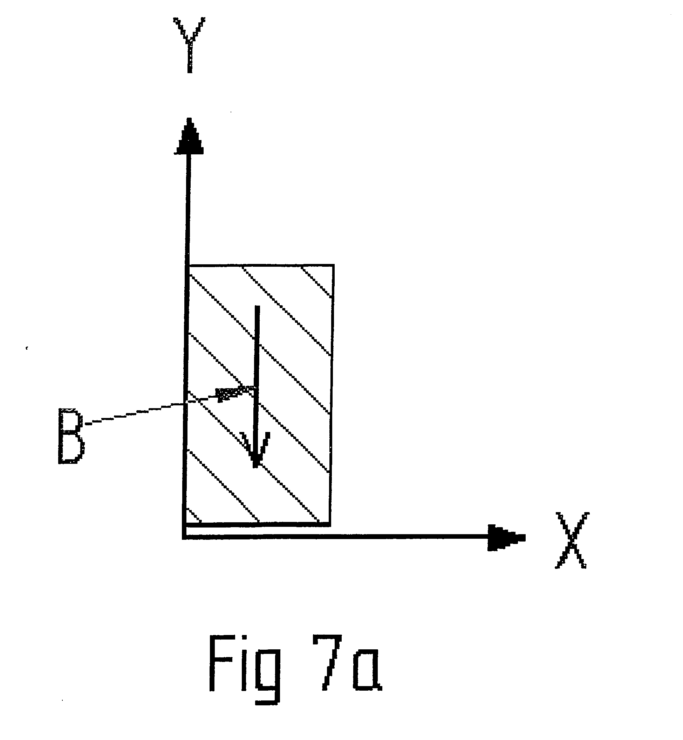

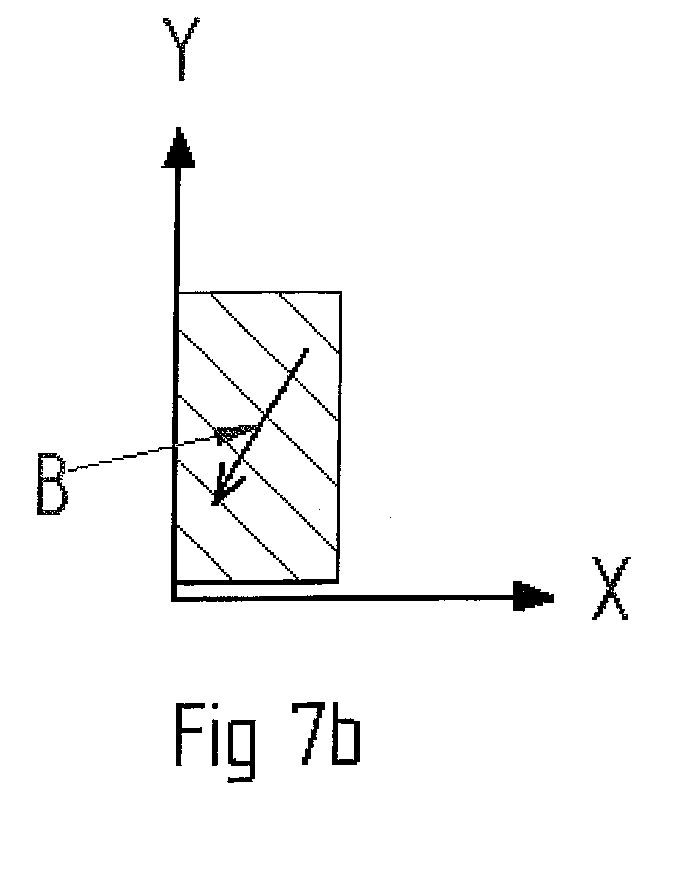

In dem Schnitt VII-VII sind in den zugehörigen Figuren 7a und 7b zwei verschiedene Ausführungsformen gezeigt. Bei der Ausführungsform gemäß Figur 7a ist das magnetische Feld ohne eine Komponente in Richtung der Symmetrieachse x, also nur in der y-z-Ebene ausgerichtet. Bereits diese Ausführungsform besitzt ein gegenüber dem gattungsgemäßen Stand der Technik stärkeres Magnetfeld im Bereich des Kristalles 13.

Wenn darüberhinaus das gesamte Magnetfeld B noch einen von 90° abweichenden Winkel mit der Symmetrieachse x bildet, so ergeben sich noch bessere Ergebnisse als bei der Ausführungsform gemäß Figur 7a, (die aber durch einen erhöhten Fertigungsaufwand erzielt werden). Innerhalb eines Teiles 19 bzw. 20 ist die Ausrichtung des magnetischen Feldes B parallel zueinander und, in der Schnittebene VII-VII gemäß Figur 6 ausgerichtet, die die Spiegelsymmetrieebene für das in Figur 6 gezeigte Teil 19 des Abschlussmagneten 16 bildet.

Wichtig ist nunmehr die Anordnung und Polarisierung der Abschlussmagnete zu dem axial magnetisierten Zylinder 11.

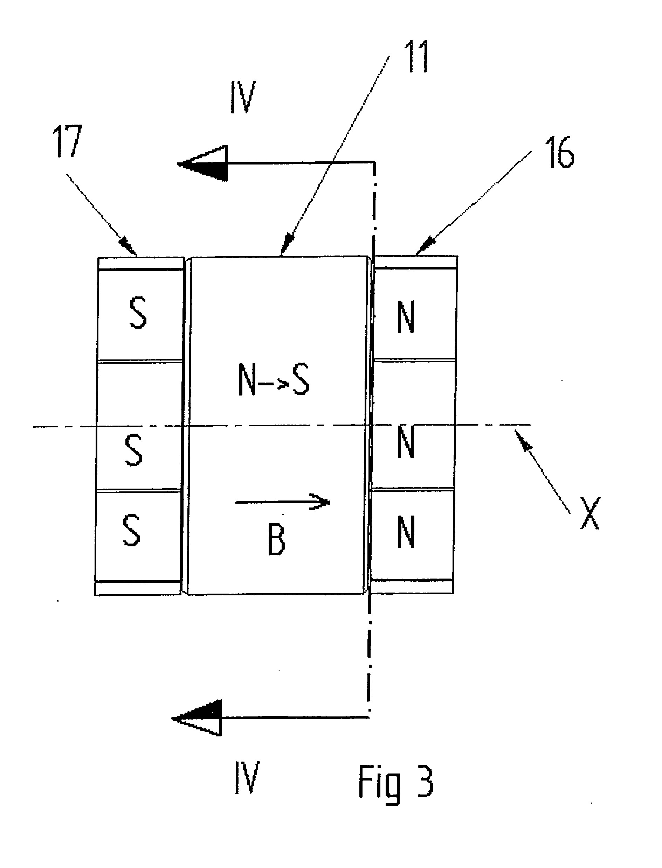

Zunächst ist, wie mit Bezug auf die Figuren 6 und 7 schon dargelegt, jedes Teil 19 oder 20 der Abschlussmagnete 16 bzw. 17 etwa radial magnetisiert. Außerdem ist der eine Abschlussmagnet 17 dann von innen nach außen (also mit im äußeren Teilmantelbereich liegenden Südpol S) magnetisiert, wohingegen der andere Abschlussmagnet 16 von außen nach innen, also im außenliegenden Teilmantelbereich liegenden Nordpol polarisiert, wie schematisch in den Figuren 2 und 3 dargestellt.

Schließlich muss nach Lehre der Erfindung der hohle Zylinder 11 mit seinem Nordpol N an den von innen nach außen gerichtet magnetisierten Abschlussmagnet 17 und mit seinem Südpol S an den von außen nach innen gerichtet magnetisierten Abschlussmagnet 16 angrenzen, wie es in den Figuren 2 und 3 gezeigt ist. Nur dann werden die erfindungsgemäßen Ergebnisse erzielt.

## Patentansprüche

1. Faradayrotator für einen Faradayisolator mit einem Eintrittspolarisator, mit einem Austrittspolarisator, mit einem dazwischen angeordneten, walzenförmigen, zu seiner Symmetrieachse (x) symmetrisch angeordneten optischen Kristall (13), mit einem diesen umgebenden, senkrechten Zylinder (11) mit einem hohlen Raum aus einem permanentmagnetischen Werkstoff, welcher Zylinder axial magnetisiert ist und dessen Magnetfeld (B) sich in dem hohlen Raum (12) etwa parallel zu der in nur einer Richtung vom Nordpol (N) zum Südpol (S) verlaufenden Symmetrieachse (x) erstreckt, und mit je einem sich an die beiden Stirnflächen (14) in einer zu der Symmetrieachse (x) Senkrechten Ebene anschließenden Abschlussmagnet (16, 17), von denen jeder als hohler, senkrechter Zylinder ausgebildet ist und in Verlängerung der Symmetrieachse (x) eine Durchlassöffnung (18) aufweist, **dadurch gekennzeichnet, dass** jeder Abschlussmagnet (16, 17) zumindest bereichsweise im wesentlichen bezüglich der Symmetrieachse (x) radial magnetisiert ist, dass der eine der beiden Abschlussmagnete (16) radial von innen (N) nach außen (S) und der andere Abschlussmagnet (17) radial von außen (N) nach innen (S) gerichtet magnetisiert ist und dass der hohle Zylinder (11) mit seinem Nordpol (N) an den von innen nach außen gerichtet magnetisierten Abschlussmagnet (17) und mit seinem Südpol (S) an den von außen nach innen gerichtet magnetisierten Abschlussmagnet (16) angrenzt.

2. Faradayrotator nach Anspruch 1, **dadurch gekennzeichnet, dass** jeder Abschlussmagnet (16, 17) aus zwei oder mehr bezüglich der Symmetrieachse (x) zumindest bereichsweise im wesentlichen radial magnetisierten, strahlensymmetrischen Teilen (19 bzw. 20) besteht.

3. Faradayrotator nach Anspruch 2, **dadurch gekennzeichnet, dass** die Teile (19, 20) des Abschlussmagneten (16, 17) zusammen einen senkrechten kreisförmigen Hohlzylinder bilden.

4. Faradayrotator nach Anspruch 3, **dadurch gekennzeichnet, dass** die Teile (19, 20) im Schnitt längs der y-z-Achse im wesentlichen kreissektorförmig mit einem großen Radius und mit einem inneren fehlenden Bereich, z.B. in Form eines Kreissektors kleineren Durchmessers zur Bildung der Durchlassöffnung (18) ausgebildet sind.

5. Faradayrotator nach einem der Ansprüche 1 bis 4, **dadurch gekennzeichnet, dass** die Teile (19, 20) der im wesentlichen radial magnetisierten Abschlussmagnete (16 bzw. 17) auch noch eine Komponente in Richtung der Symmetrieachse (x) besitzen.

## Claims

1. Faraday rotator for a Faraday isolator comprising an input polariser; an output polariser; a cylindrical optical crystal (13) disposed between them and arranged symmetrically to its axis of symmetry (x); a perpendicular cylinder (11) with a hollow cavity surrounding the latter and made of a permanent-magnetic material, wherein the cylinder is magnetised axially, and its magnetic field (B) extends approximately parallel to the axis of symmetry (x) extending only in one direction from the north pole (N) to the south pole (S); and comprising respectively one terminating magnet (16, 17) adjoining each of the two end surfaces (14) in a plane perpendicular to the axis of symmetry (x), each of which is formed as a hollow, perpendicular cylinder and provides a through opening (18) by way of extension of the axis of symmetry (x),
**characterised in that**
each terminating magnet (16, 17) is magnetised, at least in some regions, substantially radially with reference to the axis of symmetry (x); that one of the two terminating magnets (16) is magnetised radially in the direction from the inside (N) to the outside (S); and the other terminating magnet (17) is magnetised radially in the direction from the outside (N) to the inside (S); and that the hollow cylinder (11) adjoins the terminating magnet (17) magnetised in the direction from the inside to the outside with its north pole (N) and adjoins the terminating magnet (16) magnetised in the direction from the outside to the inside with its south pole (S).

2. Faraday rotator according to claim 1,
**characterised in that**
each terminating magnet (16, 17) consists of two or more radially-symmetrical parts (19 and 20) magnetised, at least in regions, substantially radially with reference to the axis of symmetry (x).

3. Faraday rotator according to claim 2,
**characterised in that**
the parts (19, 20) of the terminating magnets (16, 17) together form a circular, perpendicular, hollow cylinder.

4. Faraday rotator according to claim 3,
**characterised in that**
the parts (19, 20) are formed in cross-section along the y-z axis substantially in the shape of a circular sector with a large radius and with a missing inner region, for example, in the shape of a circular sector of smaller diameter thereby providing the through opening (18).

5. Faraday rotator according to any one of claims 1 to 4,
**characterised in that**
the parts (19, 20) of the substantially radially-magnetised terminating magnets (16, 17) also provide a component in the direction of the axis of symmetry (x).

## Revendications

1. Rotateur Faraday destiné à un isolateur Faraday comportant un polariseur d'entrée, un polariseur de sortie, un cristal optique(13) de forme cylindrique disposé entre ceux-ci, disposé de manière symétrique par rapport à son axe de symétrie (x), comportant un cylindre (11) vertical, entourant celui-ci, avec un espace creux constitué d'un matériau de type aimant permanent, lequel cylindre est magnétisé axialement et dont le champ magnétique (B) s'étend dans l'espace creux (12) quasiment parallèlement à l'axe de symétrie (x) s'étendant dans une seule direction du pôle nord (N) au pôle sud (S), et comportant respectivement un aimant terminal (16, 17) adjacent aux deux surfaces frontales (14) dans un plan perpendiculaire à l'axe de symétrie (x), chacun d'entre eux étant configuré sous la forme d'un cylindre creux, vertical, et présentant dans le prolongement de l'axe de symétrie (x) une ouverture de passage (18),
**caractérisé en ce que** chaque aimant terminal (16, 17) est magnétisé radialement au moins par section sensiblement par rapport à l'axe de symétrie (x), **en ce que** l'un des deux aimants terminaux (16) est magnétisé radialement de l'intérieur (N) vers l'extérieur (S) et l'autre aimant terminal (17) est magnétisé radialement de l'extérieur (N) vers l'intérieur (S), et **en ce que** le cylindre creux (11), avec son pôle nord (N), est adjacent à l'aimant terminal (17) magnétisé de l'intérieur vers l'extérieur et, avec son pôle sud (S), est adjacent à l'aimant terminal (16) magnétisé de l'extérieur vers l'intérieur.

2. Rotateur Faraday selon la revendication 1, **caractérisé en ce que** chaque aimant terminal (16, 17) est constitué de deux parties (19 ou 20) ou plus, symétriques en termes de rayonnement, magnétisés sensiblement radialement au moins par section par rapport à l'axe de symétrie (x).

3. Rotateur Faraday selon la revendication 2, **caractérisé en ce que** les parties (19, 20) de l'aimant terminal (16, 17) forment conjointement un cylindre creux circulaire vertical.

4. Rotateur Faraday selon la revendication 3, **caractérisé en ce que** les parties (19, 20) sont configurées en coupe le long de l'axe y-z sensiblement sous la forme de secteur de cercle avec un grand rayon et une zone manquante à l'intérieur, par exemple sous la forme d'un secteur de cercle de plus petit diamètre afin de former l'ouverture de passage (18).

5. Rotateur Faraday selon l'une quelconque des revendications 1 à 4, **caractérisé en ce que** les parties (19, 20) des aimants terminaux (16 ou 17) magnétisés sensiblement radialement comportent en outre une composante en direction de l'axe de symétrie (x).
